Europäisches Patentamt

European Patent Office

Office européen des brevets

(11) Veröffentlichungsnummer: **0 561 240 A2**

# EUROPÄISCHE PATENTANMELDUNG

(21) Anmeldenummer: **93103586.9**

(22) Anmeldetag: **05.03.93**

(51) Int. Cl.⁵: **C08L 69/00**, C08K 3/04, C08J 5/18

(30) Priorität: **18.03.92 DE 4208644**

(43) Veröffentlichungstag der Anmeldung:
**22.09.93 Patentblatt 93/38**

(84) Benannte Vertragsstaaten:
**AT BE DE FR GB IT NL SE**

(71) Anmelder: **BAYER AG**

**D-51368 Leverkusen(DE)**

(72) Erfinder: **Schmitz, Jürgen, Dr.**
**In der Kuhtrift 46**
**W-4047 Dormagen 5(DE)**
Erfinder: **Weber, Hans-Leo, Dipl.-Ing.**
**Dahlienweg 7**
**W-4049 Rommerskirchen 2(DE)**
Erfinder: **Fausten, Hans-Josef**
**Fichtenweg 5**
**W-4047 Dormagen 1(DE)**
Erfinder: **Schmoranzer, Hans-Wolfgang,**
**Dipl.-Ing.**
**Bengdbruchstrasse 14**
**W-4156 Willich 4(DE)**
Erfinder: **Hänsel, Udo, Dipl.-Ing.**
**Wilhelm-Busch-Strasse 98**
**W-4047 Dormagen 5(DE)**

(54) **Antistatische Polycarbonat Extrusionsfolien.**

(57) Gegenstand der vorliegenden Erfindung sind antistatische Polycarbonat-Extrusionsfolien aus thermoplastischen Polycarbonaten, Polyalkylenterephthalaten und Ruß, sowie Verfahren zur Herstellung dieser Folien.

Gegenstand der vorliegenden Erfindung sind kohlenstoffhaltige Folien einer Dicke von 0,15 mm bis 0,6 mm mit einem Oberflächenwiderstand $\leqq 5 \times 10^5$ Ohm und einer Reißdehnung > 20 %, die nach dem Extrusionsverfahren hergestellt sind, die dadurch gekennzeichnet sind, daß sie

a) 53 Gew.-% bis 71 Gew.-% an thermoplastischen Polycarbonaten,

b) 29 Gew.-% bis 16 Gew.-% an thermoplastischen Polyalkylenterephthalaten und

c) 18 Gew.-% bis 13 Gew.-% an Ruß enthalten,

wobei die Summe der Gewichtsprozente der Komponenten a) + b) + c) jeweils 100 Gew.-% ist.

Sie zeichnen sich durch antistatisches Verhalten bis hin zu einer gewissen Leitfähigkeit und außerdem durch gute Zähigkeit, Reißfestigkeit und Wärmeformbeständigkeit aus. Somit eignen sich die erfindungsgemäßen Folien beispielsweise zum Verpacken von elektronischen Bauteilen, insbesondere von solchen, die durch elektrostatische Aufladung gefährdet sind.

Gegenstand der vorliegenden Erfindung ist somit auch die Verwendung der erfindungsgemäßen kohlenstoffhaltigen Folien zum Verpacken von elektronischen Bauteilen.

Gegenstand der vorliegenden Erfindung ist außerdem ein Verfahren zur Herstellung der kohlenstoffhaltigen Folien, das dadurch gekennzeichnet ist, daß man das thermoplastische Polycarbonat mit dem Ruß innig vermischt und nach Zusatz des thermoplastischen Polyalkylenterephthalats das Gesamtgemisch zu den gewünschten Folien extrudiert.

Gegenstand der Erfindung sind außerdem die nach dem erfindungsgemäßen Verfahren erhältlichen kohlenstoffhaltigen Folien.

Gemäß Jp 932 197 (JA-A-46-88 686) sind Mischungen von 50 Teilen oder mehr Polycarbonat mit 50 Teilen oder weniger Polybutylenterephthalat bekannt. Der Zusatz des Polybutylenterephthalats dient der verbesserten Verarbeitung des Polycarbonatharzes.

Als Füllstoff kann unter anderem Ruß zugesetzt werden. Die Herstellung von Folien ist in der japanischen Literaturstelle nicht erwähnt.

Gemäß US-PS 4 559 164 sind elektrisch leitfähige Polybutylenterephthalate bekannt, die 10 bis 25 Gew.-% Ruß enthalten können (Spalte 1, Zeilen 65/67 des US-Patents). Darüber hinaus ergeben sich aus Anspruch 1 des US-Patents, daß die Abmischungen 1 bis 50 % Bisphenol-A-Polycarbonat enthalten können; daraus resultiert eine Polybutylenterephthalatmenge von mindestens 37,5 % bei 12,5 % Ruß und 50 % Polycarbonat. Bei kleineren Rußgehalten und kleineren Polycarbonatgehalten liegt die Polybutylenterephthalatmenge noch höher.

Gemäß Anspruch 4 des US-Patents beträgt die Menge an Bisphenol-A-Polycarbonat 1 bis 50 Gew.-% des Polybutylenterephthalats in der Abmischung.

Wie immer dies gemeint sein mag, 50 % von einer 75/25 PBT-Rußmischung, also 37,5 PBT/ 37,5 PC/ 25 Ruß oder 50 PBT/ 25 PC/ 25 Ruß oder 75 PBT/ 25 Ruß/ 37,5 PC, in jedem Fall ist der Polybutylenterephthalatgehalt nicht kleiner als der Polycarbonatgehalt.

Folien sind im US-Patent 4 559 164 nicht angesprochen.

Aus der EP 0 249 101 beziehungsweise dem US-Patent 4 876 033 sind Folien aus Polycarbonat-Polyalkylenterephthalat-Mischungen bekannt, die jedoch Mischungen aus Ruß + Graphit enthalten.

Derartige Folien haben jedoch eine schlechte Reißdehnung.

In Jp-2-233 765 sind Polycarbonat-Polyalkylenterephthalat-Ruß-Mischungen für elektrophotographische Formkörper beschrieben, die nur eine Reißdehnung von 0 bis 20 % haben.

In Jp-2-196 854 sind Polycarbonat-Polyalkylenterephthalat-Ruß-Mischungen für elektrisch leitende Platten bekannt, die ebenfalls eine geringe Reißdehnung haben. In US-PT 3 218 327 sind Mischungen von Polycarbonaten mit Polyalkylenterephthalaten generell beschrieben. Der Zusatz von Ruß wird nur erwähnt (Spalte 3, Zeile 7) ebenso die Möglichkeit, Filme aus den Mischungen herzustellen (Spalte 4, Zeile 9).

Der vorliegenden Erfindung lag nun die Aufgabe zugrunde, extrudierte Polycarbonatfolien herzustellen, die folgende Eigenschaften haben:

1. Dicke 0,15 bis 0,6 mm

2. Oberflächenwiderstand $\leqq 5 \times 10^5$ Ohm

3. Reißdehnung $\geqq 20$ %

4. möglichst geringer Rußgehalt,

5. leicht durch Tiefziehen zu verformen,

6. größtmögliche Geschwindigkeit bei der Herstellung von Blistergurten zur Verpackung elektronischer elektrostatisch gefährdeter Bauelemente.

Erfindungsgemäße Folien erhält man, wenn man einen Polycarbonatcompound mit einem Rußgehalt von 18 % herstellt und diesen mit Hilfe eines Extruders über eine Breitschlitzdüse zu einer Folie ausformt. Eine Verringerung des Rußgehaltes auf 14 % bewirkt einen Anstieg des Oberflächenwiderstandes auf > $10^6$ Ohm, womit die oben gestellte Bedingung ($\leqq 5 \times 10^5$ Ohm) nicht mehr erfüllt wird.

Überraschend und nicht vorauszusehen war, daß bei Zusatz von Poly(butylenterephthalat) trotz des niedrigen Rußgehaltes von 14 % Oberflächenwiderstände von < 5 x $10^5$ Ohm gemessen werden und dieses Ergebnis auch bei noch niedrigen Rußgehalten gefunden wird, wobei die Bedingung "Reißdehnung ≧ 20 %" den niedrigsten Polycarbonat-Gehalt mit ca. 61 % und damit den niedrigsten Rußgehalt mit ca. 13 % bestimmt.

Tabelle

| gemessen an Folien 0,200 mm dick | | | | |
|---|---|---|---|---|
| Rezeptur | (1) | (2) | (3) | (4) |
| PC % | 82,0 | 85,6 | 65,6 | 61,5 |
| PBT % | - | - | 20,0 | 25 |
| Ruß % | 18,0 | 14,4 | 14,4 | 13,5 |
| $R_{OA}$ Ohm | $2,3 \times 10^4$ | $1,2 \times 10^6$ | $2,7 \times 10^4$ | $4,2 \times 10^4$ |
| $\epsilon_r$ % | 27 | 78 | 42 | 20 |

Die nach dem erfindungsgemäßen Verfahren hergestellten Folien (3) und (4) erfüllen neben den Anforderungen an Reißdehnung und Oberflächenwiderstand auch die Forderung des leichten Verformens. Die Produktionsgeschwindigkeit (1) = 100 % konnte z.B. für SOT 223-Gehäuse bei (3) um 42 %, bei (4) um 65 % erhöht werden.

Als thermoplastische Polycarbonate im Sinne der vorliegenden Erfindung kommen die durch Umsetzung von Diphenolen, insbesondere von Dihydroxydiarylalkanen, mit Phosgen oder Diestern der Kohlensäure erhältlichen Polykondensate in Betracht, wobei außer den unsubstituierten Dihydroxydiarylalkanen auch solche geeignet sind, deren Arylreste in o- und/oder m-Stellung zur Hydroxylgruppe Methylgruppen oder Halogenatome tragen. Ebenso sind verzweigte Polycarbonate geeignet.

Die in Rede stehenden thermoplastischen Polycarbonate haben mittlere Gewichtsmittelmolekulargewichte $\overline{M}_w$ zwischen 22 000 und 50 000, vorzugsweise zwischen 28 000 und 40 000, ermittelt durch Messungen der rel. Viskosität in $CH_2Cl_2$ bei 25°C und einer Konzentration von 0,5 g pro 100 ml.

Geeignete Diphenole sind z.B. Hydrochinon, Resorcin, 4,4'-Dihydroxydiphenyl, Bis-(hydroxy-phenyl)-alkane wie beispielsweise $C_1$-$C_8$-Alkylen- bzw. $C_2$-$C_8$-Alkylidenbisphenole, Bis-(hydroxyphenyl)-cycloalkane wie beispielsweise $C_5$-$C_{15}$-Cycloalkylen- bzw. $C_5$-$C_{15}$-Cycloalkylidenbisphenole, Bis-(hydroxy-phenyl)-sulfide, -ether, -ketone, -sulfoxide oder -sulfone. Ferner $\alpha,\alpha'$-Bis-(hydroxyphenyl)-diisopropylbenzol sowie die entsprechenden kernalkylierten bzw. kernhalogenierten Verbindungen. Bevorzugt sind Polycarbonte auf Basis Bis-(4-hydroxy-phenyl)-propan-2,2 (Bisphenol A), Bis-(4-hydroxy-3,5-dichlor-phenyl)-propan-2,2 (Tetrachlorbisphenol A), Bis-(4-hydroxy-3,5-dibrom-phenyl)-propan-2,2(Tetrabrombisphenol A), Bis-(4-hydroxy-3,5-dimethyl-phenyl)-propan-2,2 (Tetramethylbisphenol A), Bis-(4-hydroxy-phenyl)-cyclohexan-1,1 (Bisphenol Z) sowie auf Basis von Dreikernbisphenolen wie $\alpha,\alpha'$-Bis-(4-hydroxyphenyl)-p-diisopropylbenzol.

Weitere für die Herstellung der Polycarbonate geeignete Diphenole sind in den US-Patenten 2 970 131, 2 991 273, 2 999 835, 2 999 846, 3 028 365, 3 062 781, 3 148 172, 3 271 367 und 3 275 601 beschrieben.

Die aromatischen Polycarbonate können in bekannter Weise durch den Einbau geringer Mengen, vorzugsweise von Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxygruppen, verzweigt sein.

Polycarbonate dieser Art sind z.B. in den deutschen Offenlegungsschriften 1 570 533, 1 595 762, der britischen Patentschrift 1 079 821, der US-Patentschrift Re 27 682 und in dem deutschen Patent 2 500 092 beschrieben.

Einige der verwendbaren Verbindungen mit drei oder mehr als drei phenolischen Hydroxygrupen sind beispielsweise 2,4-Bis-(hydroxyphenyl-isopropyl)-phenol, 2,6-Bis-(2'-hydroxy-5'-methyl-benzyl)-4-methylphenol, 2-(4-Hydroxyphenyl)-2-(2,4-dihydroxyphenyl)-propan und 1,4-Bis-(4,4''-dihydroxytriphenyl-methyl)-benzol.

Einige der sonstigen dreifunktionellen Verbindungen sind 2,4-Dihydroxybenzoesäure, Trimesinsäure, Cyanurchlorid und 3,3-Bis-(4-hydroxy-3-methyl-phenyl)-2-oxo-2,3-dihydroindol (Isatin-bis-kresol).

Thermoplastische Polyalkylenterephthalate im Sinne der Erfindung sind Polyester aus Terephthalsäure und einem aliphatischen Diol, vorzugsweise aus der Gruppe Butandiol-1,4, Ethandiol, Cyclohexandimethanol-1,4 und insbesondere Butandiol-1,4.

3

Die erwähnten Polyalkylenterephthalate können vorzugsweise neben den aufgeführten Glykolresten bis zu 20 Mol-% Reste anderer aliphatischer Diole mit 3 bis 12 C-Atomen oder cycloaliphatischer Diole mit 6 bis 21 C-Atomen enthalten, z.B. solche auf Basis von Propandiol-1,3, Neopentylglykol, Pentandiol-1,5, Hexandiol-1,6, 3-Methylpentandiol-2,4, 2-Methylpentandiol-2,4-2,2,4-Trimethylpentandiol-1,3.

Neben Terephthalsäureestern können in den Polyalkylenterephthalaten bis zu 15 Mol-% anderer Dicarbonsäurereste, z.B. Isophthalsäure, Adipinsäure, Succinsäure, Sebacinsäure, Naphthalin-2,6-dicarbonsäure, Diphenylcarbonsäure, Azelainsäure, Cyclohexandiessigsäure enthalten sein. Die Polyalkylenglykolterephthalate können nach bekannten Verfahren beispielsweise aus Terephthalsäuredialkylester und dem entsprechenden Diol durch Umesterung erhalten werden (siehe z.B. US-Patente 2 647 885, 2 643 989, 2 534 028, 2 578 660, 2 742 494, 2 901 466). Zur Herstellung geht man beispielsweise von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140°C auf 210 - 220°C erhöht. Der freigesetzte Alkohol wird abdestilliert. Die Aufkondensation erfolgt anschließend bei Temperaturen von 210 - 180°C, der Druck wird dabei stufenweise bis auf weniger als 1 Torr erniedrigt, wobei das überschüssige Diol abdestilliert wird.

Die Molekulargewichte $\overline{M}_w$ der Polyalkylenterephthalate liegen zwischen 30 000 und 80 000, die Molekulargewichte $\overline{M}_w$ der Mischpolyester aus Terephthal- und Isophthalsäuren liegen auch zwischen 30 000 und 80 000. Die Bestimmung des $\overline{M}_w$ erfolgt durch Messung der intrinsic-Viskosität (Grenzviskositätszahl, auf Konzentration 0 extrapolierter Wert der reduzierten spezifischen Viskosität)-I.V-in Phenol/o-Dichlorbenzol (1/1) bei 25°C als 5 %ige Lösung, bzw. über den RSV-Wert (reduzierte spezifische Viskosität), wobei es sich hier um den durch die Konzentration der gemessenen Lösung dividierten Betrag der spezifischen Viskosität handelt. Die Betimmung des RSV-Wertes wird in Phenol/Tetrachlorethan (60/40) bei 20°C mit einer 23 %igen Lösung vorgenommen. Die I.V-Werte liegen im allgemeinen zwischnen 0,85 und 1,25.

Besonders bevorzugte Polyalkylenterephthalate sind Polybutylenterephthalate mit $\overline{M}_w$ zwischen 30 000 und 60 000.

Bevorzugte Ruße sind sogenannte Leitfähigkeitsruße, die außer einer sehr geringen Primärteilchengröße eine große äußere und innere Oberfläche, d.h. hohe Porosität und somit hohe BET-Oberflächen bei der $N_2$-Adsorption und hohe Dibutylphthalat (DBP)-Adsorptionswerte aufweisen und weiterhin hochstrukturiert sind, d.h. starke Agglomerationen oder Aggregationen von einzelnen Rußteilchen zu größeren Gebilden wie z.B. Ketten aufweisen, wobei die BET-Oberflächen der Ruße im allgemeinen größer sind als 20 m²/g und die DBP-Adsorption oberhalb von 40 ml/100 g Ruß liegen.

Insbesondere geeignet sind Leitfähigkeitsruße mit BET-Oberflächen von über 50 m²/g und DBP-Adsorptionen von größer als 80 ml/100 g bei mittleren Primärpartikelgrößen von unter 50 Nanometer (nm). Derartige elektrisch leitfähige Ruße sind als handelsübliche Spezialruße mit ausgeprägten Strukturen und hohen elektrischen Leitfähigkeiten verfügbar.

Die Vermischung des Rußes mit dem thermoplastischen Polycarbonat kann beispielsweise durch Pulvermischtechnologie erfolgen, indem man Polycarbonatpulver mit Ruß bei Raumtemperatur innig vermischt und anschließend mittels eines Extruders bei etwa 250°C bis etwa 300°C zu Granulat extrudiert. Alternativ kann das Polycarbonat mit dem Ruß über geeignete Kneter und Dosierung der Mischungskomponenten gemischt und direkt granuliert werden, wobei wiederum etwa Temperaturen von 250°C bis 300°C eingehalten werden, die Granulierung jedoch unter Anlegung eines Vakuums erfolgen muß, welches mittels Entgasungseinrichtungen erreicht wird.

Die Extrusion der Polycarbonat-Ruß-Mischungen, welche wie vorstehend beschrieben als Granulat anfallen, mit dem thermoplastischen Polyalkylenterephthalat erfolgt im allgemeinen in üblichen Entgasungsextrudern zur Herstellung von Extrusionsfolien. Der Temperaturbereich des Extrusionsvorgangs liegt hierbei zwischen etwa 220°C und 280°C.

Alternativ kann nach Vermischung von Polycarbonat mit Ruß die separate Verarbeitung zu Granulat entfallen, und statt dessen der unmittelbar anschließende Polyalkylenterephthalatzusatz erfolgen und sich danach die vorstehend beschriebene Extrusion anschließen. Diese Verfahrensweise ist bezüglich der Handhabung der Komponenten etwas weniger vorteilhaft.

Eine weitere Herstellungsvariante besteht darin, daß man nach Vermischung von Polycarbonat mit Ruß den Zusatz des Polyalkylenterephthalats sofort anschließt oder simultan einbezieht und dieses Gemisch zu Granulat, entweder wie oben beschrieben mittels Extrusion oder durch eine Agglomeration in bekannten Agglomeraturen verarbeitet, bevor sich die Extrusion zu Formkörpern, beispielsweise zu Folien, wie oben beschrieben, anschließt. Diese Verfahrensvariante schließt somit die zweimalige thermoplastische Verarbeitung des Polyalkylenterephthalats ein.

Mischungen aus thermoplastischen Polycarbonaten und thermoplastischen Polyalkylenterephthalaten und daraus hergestellte Folien sind bekannt [siehe beispielsweise EP-OS 0 120 394 (Le A 22 232-EP), EP-OS 0 143 352 (Le A 22 591-EP) und EP-OS 0 106 225 (Le A 21 855-EP) und in und zu diesen europäischen Offenlegungsschriften jeweils angezogene Literatur].

Bekannt sind auch Polycarbonatfolien mit einem Gehalt an Ruß [siehe beispielsweise EP-OS 0 143 352 (Le A 22 591) und EP-OS 0 141 310 (Le A 22 590) und in und zu diesen europäischen Offenlegungsschriften jeweils angezogene Literatur].

Den thermoplastischen Polycarbonaten und den thermoplastischen Polyalkylenterephthalaten können noch die für thermoplastische Polycarbonate bzw. thermoplastische Polyalkylenterephthalate bekannten Stabilisatoren gegen Hitze, Feuchtigkeit und Luft zugesetzt sein.

Gegenstand der vorliegenden Erfindung sind somit auch kohlenstoffhaltige Folien einer Dicke von 0,15 mm bis 0,6 mm mit einem Oberflächenwiderstand $\leq 5 \times 10^5$ Ohm und einer Reißdehnung > 20 %, die nach dem Extrusionsverfahren hergestellt sind, die dadurch gekennzeichnet sind, daß sie aus

a) 53 Gew.-% bis 71 Gew.-% an thermoplastischen Polycarbonaten,

b) 29 Gew.-% bis 16 Gew.-% an thermoplastischen Polyalkylenterephthalaten und

c) 18 Gew.-% bis 13 Gew.-% an Ruß und gegebenenfalls Stabilisatoren gegen Hitze, Feuchtigkeit und Luft bestehen.

Beispiele

A Herstellungsvorschrift für Grundcompounds

Aus Bisphenol-A-Polycarbonat-Granulat $\eta_{rel}$ 1.300, welches 0,07 Gew.-% Tris-(3-ethyl-oxetanyl-3)-methyl-phosphit stabilisiert ist, und Leitruß (geeignet sind Leitruße, die außer einer sehr geringen Primärteilchengröße eine große äußere und innere Oberfläche, d.h. hohe Porosität und somit hohe BET-Oberflächen bei der $N_2$-Adsorption und hohe Dibutylphthalat (DBP)-Adsorptionswerte aufweisen und weiterhin hochstrukturiert sind, d.h. starke Agglomerationen oder Agglomerationen von einzelnen Rußteilchen zu größeren Gebilden wie z.B. Ketten aufweisen, wobei die BET-Oberflächen der Ruße im allgemeinen größer sind als 20 m$^2$/g und die DBP-Adsorption oberhalb von 40 ml/100 g Ruß liegen), wird auf einem Compoundierextruder mit Entgasung unter dosierter Zugabe der Komponenten Polycarbonat und Ruß der Grundcompound hergestellt.

Die Temperatur im Aufschmelzbereich des Compoundierextruders liegt bei 280°C.

B Herstellung antistatischer Folien

B.1. Der Grundcompound wird in bekannter Weise in einem Extruder aufgeschmolzen und über eine Breitschlitzdüse mit nachgeschaltetem Glättwerk zu einer Flachfolie extrudiert. Die Extrusionstemperatur soll dabei 260 bis 330°C, die des Glättwerkes nicht über 110°C betragen [Kennwerte s. Tabelle Rezeptur (1)].

B.2. Der Grundcompound wird im Verhältnis 80:20 mit Poly(butylenterephthalat) innig vermischt und wie in B.1. beschrieben zu einer Folie extrudiert. Die Extrusionstemperatur liegt dabei bei 240 bis 260°C, die Temperatur des nachfolgenden Glättwerkes bei ca. 60°C. Die so erhaltene Folie hat folgende Zusammensetzung:

| PC | 65,6 Gew.-% |
|-----|-------------|
| PBT | 20,0 Gew.-% |
| Ruß | 14,4 Gew.-% |

[Kennwerte s. Tabelle, Rezeptur (3)]

B.3. Der Grundcompound wird im Verhältnis 75:25 mit Poly(butylenterephthalat) innig vermischt und wie in B.2. beschrieben zu einer Folie extrudiert. Die so erhaltene Folie hat folgende Zusammensetzung:

| PC | 61,5 Gew.-% |
|-----|-------------|
| PBT | 25,0 Gew.-% |
| Ruß | 13,5 Gew.-% |

[Kennwerte s. Tabelle, Rezeptur (4)]

B.4. Der Grundcompound wird im Verhältnis 80:20 mit Polycarbonat $\eta_{rel}$ = 1.300, welches mit 0,07 Gew.-% Tris-(3-ethyl-oxetanyl-3)-methyl-phosphit stabilisiert ist, innig vermischt und wie in B.1. beschrieben zu einer Folie extrudiert. Die so erhaltene Folie hat folgende Zusammensetzung:

| | |
|---|---|
| PC | 85,6 Gew.-% |
| Ruß | 14,4 Gew.-% |

[Kennwerte s. Tabelle, Rezeptur (2)]

**Patentansprüche**

1. Kohlenstoffhaltige Folien einer Dicke von 0,15 mm bis 0,6 mm, mit einem Oberflächenwiderstand $\leq 5 \times 10^5$ Ohm und einer Reißdehnung > 20 %, die nach dem Extrusionsverfahren hergestellt sind, dadurch gekennzeichnet, daß sie
   a) 53 Gew.-% bis 71 Gew.-% an thermoplastischen Polycarbonaten,
   b) 29 Gew.-% bis 16 Gew.-% an thermoplastischen Polyalkylenterephthalaten und
   c) 18 Gew.-% bis 13 Gew.-% an Ruß enthalten,
   wobei die Summe der Gewichtsprozente der Komponenten a) + b) + c) jeweils 100 Gew.-% ist.

2. Verfahren zur Herstellung von Folien des Anspruches 1, dadurch gekennzeichnet, daß man das thermoplastische Polycarbonat mit dem Ruß innig vermischt und nach Zusatz des thermoplastischen Polyalkylenterephthalates das Gesamtgemisch zu den gewünschten Folien extrudiert.

3. Verfahren gemäß Anspruch 2, dadurch gekennzeichnet, daß man nach der Vermischung des thermoplastischen Polycarbonats mit dem Ruß dieses Gemisch zu Granulat verarbeitet und erst danach der Zusatz des thermoplastischen Polyalkylenterephthalats erfolgt und man zu den gewünschten Folien extrudiert.

4. Verfahren gemäß Anspruch 2, dadurch gekennzeichnet, daß man das thermoplastische Polycarbonat mit dem Ruß und mit dem thermoplastischen Polyalkylenterephthalat vermischt und danach das Gesamtgemisch zu den gewünschten Folien extrudiert.

5. Verfahren gemäß Anspruch 4, dadurch gekennzeichnet, daß man das Gesamtgemisch zu Granulat verarbeitet und erst danach zu den gewünschten Folien extrudiert.

6. Kohlenstoffhaltige Folien, erhältlich nach den Verfahren der Ansprüche 2 bis 5.

7. Folien gemäß Anspruch 1, dadurch gekennzeichnet, daß sie aus den Komponenten a) + b) + c) und gegebenenfalls Stabilisatoren gegen Hitze, Feuchtigkeit und Luft bestehen.

8. Verwendung der Folien der Ansprüche 1 und 7 zum Verpacken von elektronischen Bauteilen.